(19) Europäisches Patentamt
European Patent Office
Office européen des brevets

(11) **EP 4 661 136 A1**

(12) **EUROPEAN PATENT APPLICATION**
published in accordance with Art. 153(4) EPC

(43) Date of publication:
**10.12.2025 Bulletin 2025/50**

(21) Application number: **23935692.6**

(22) Date of filing: **11.08.2023**

(51) International Patent Classification (IPC):
**H01M 10/056** *(2010.01)*    **H01M 10/052** *(2010.01)*

(52) Cooperative Patent Classification (CPC):
Y02E 60/10

(86) International application number:
**PCT/CN2023/112632**

(87) International publication number:
**WO 2024/227320 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.05.2023   CN 202310484808**

(71) Applicant: **Jiangsu Contemporary Amperex
Technology Limited
Changzhou, Jiangsu 213300 (CN)**

(72) Inventors:
• **NING, Ziyang**
  **hangzhou, Jiangsu 213300 (CN)**
• **LIU, Chengyong**
  **hangzhou, Jiangsu 213300 (CN)**
• **HU, Bobing**
  **hangzhou, Jiangsu 213300 (CN)**
• **ZHONG, Chengbin**
  **hangzhou, Jiangsu 213300 (CN)**

(74) Representative: **Lorenz Seidler Gossel Part. mbB
Widenmayerstr. 23
80538 München (DE)**

(54) **COMPOSITE SOLID ELECTROLYTE AND PREPARATION METHOD THEREFOR,
SOLID-STATE BATTERY AND ELECTRIC DEVICE**

(57)    This application relates to a composite solid electrolyte and a preparation method thereof, a solid-state battery, and an electric apparatus (5), where components of the composite solid electrolyte include a solid electrolyte substrate and a phase-transformation toughening agent dispersed in the solid electrolyte substrate, where the phase-transformation toughening agent is capable of phase transformation under the action of an external force.

FIG. 1

**Description**

**CROSS-REFERENCE TO RELATED APPLICATIONS**

This application claims priority to and the benefit of Chinese Patent Application No. 202310484808.0, filed with the China National Intellectual Property Administration on May 4, 2023 and entitled "COMPOSITE SOLID ELECTROLYTE AND PREPARATION METHOD THEREOF, SOLID-STATE BATTERY, AND ELECTRIC APPARATUS", which is incorporated herein by reference in its entirety.

**TECHNICAL FIELD**

This application relates to the field of battery technologies, and in particular to, a composite solid electrolyte and a preparation method thereof, a solid-state battery, and an electric apparatus.

**BACKGROUND**

In recent years, with the progress of battery research, solid-state batteries have emerged. A solid-state battery uses a solid electrolyte to replace a liquid electrolyte and a metal as a negative electrode material, reducing the probability of side reactions at high temperatures. In addition, the solid electrolyte endows the solid-state battery with characteristics such as compact structure, adjustable scale, and high design flexibility, making them suitable for microelectronic devices as well as for power and energy storage applications.

However, conventional solid electrolytes present poor mechanical strength and a tendency to fracture. During use, they are prone to fracture, especially when paired with a lithium metal negative electrode. Lithium metal forms dendrites at the solid electrolyte interface, and the formation of these dendrites may crack or even penetrate the solid electrolyte, causing short circuits and failure of the solid-state battery. As a result, practical application demands cannot be met.

**SUMMARY**

In view of this, it is necessary to provide a composite solid electrolyte and a preparation method thereof, a solid-state battery, and an electric apparatus, so as to enhance the toughness of a solid electrolyte and thereby improve the efficiency of a solid-state battery.

This application is implemented using the following technical solutions.

According to a first aspect of this application, a composite solid electrolyte is provided, where components of the composite solid electrolyte include a solid electrolyte substrate and a phase-transformation toughening agent dispersed in the solid electrolyte substrate, where the phase-transformation toughening agent is capable of phase transformation under the action of an external force.

This composite solid electrolyte includes the solid electrolyte substrate and the phase-transformation toughening agent dispersed in the solid electrolyte substrate. When subjected to an external force, for example, applied in a battery, the phase-transforming toughening agent produces internal stress correspondingly because of lithium dendrites. Under the stimulation of this stress, a phase transformation takes place in the phase-transforming toughening agent. The stress transition caused by this phase transformation process can improve the mechanical strength and toughness of the solid electrolyte substrate. This further prevents the emergence of defects inside the solid electrolyte, thereby improving the toughness.

In some embodiments, the phase-transformation toughening agent is uniformly dispersed in grains and at grain boundaries of the solid electrolyte substrate.

It can be understood that grain boundaries are interfaces between grains with the same structure but different orientations. At the grain boundary, the atomic arrangement transitions from one orientation to another, so the atomic arrangement at the grain boundary is in a transitional state. When observed under the bright field of a scanning electron microscope (SEM), the grain boundaries appear dark and black. The foregoing phase-transformation toughening agent is uniformly dispersed both in the grains and at the grain boundaries of the solid electrolyte substrate.

In some embodiments, a dispersion homogeneity H of the phase-transformation toughening agent in the solid electrolyte substrate is determined using any one of a grid counting method, an intercept method, an area method, a region method, and an exclusive circle method; where

H satisfies: $H > 20\%$.

In some embodiments, H satisfies: $20\% < H < 100\%$.

In this composite solid electrolyte, the dispersion homogeneity of the phase-transformation toughening agent in the solid electrolyte substrate is adjusted, so that the phase-transformation toughening agent is dispersed in the solid electrolyte substrate more uniformly, enhancing the overall toughness of the composite solid electrolyte.

It can be understood that a physical state and a chemical state inside the solid electrolyte substrate are referred to as metallography. The dispersion homogeneity of the phase-transformation toughening agent therein can be determined using a quantitative testing method for particle distribution homogeneity in conventional metallographic analysis methods, including any one of the grid counting method, the intercept method, the area method, the region method, and the exclusive circle method. These methods are based on different statistical approaches and have established testing procedures in the field. For specific definitions and statistical methods, refer to [Quantitative Metallographic Analysis Methods for Particle Distribution Uniformity [C] by Chang Hongying, Xie Chongjin, Xu Weixin// Proceedings of the 2007 China Steel Conference. 2007].

In some embodiments, the dispersion homogeneity H of the phase-transformation toughening agent in the solid electrolyte substrate is tested using the intercept method, including the following steps:

pressing the composite solid electrolyte into a sample to be tested and cutting the sample to be tested along a direction parallel to a thickness direction of the disc, where a cutting cross-section formed by cutting the sample to be tested is a cross-section to be tested;

placing the cross-section to be tested under a scanning electron microscope to obtain a scanning electron microscope image; and

distinguishing the solid electrolyte substrate and the phase-transformation toughening agent in the scanning electron microscope image based on contrast in a backscattered electron imaging mode, and determining a distance between any two particles of the phase-transformation toughening agent in the scanning electron microscope image using a grid line analysis method, denoted as $d_i$, where i is in a range from 1 to N, $\bar{d}$ is an average distance between any two particles of the phase-transformation toughening agent in the scanning electron microscope image, and then

$$H = 1 - \sqrt{\frac{1}{N} \sum (\frac{d_i}{\bar{d}} - 1)^2} \; ;$$

where N is an integer $\geq 2$.

In some embodiments, a volume-based particle size distribution $D_v50$ of the phase-transformation toughening agent satisfies: 50 nm $\leq D_v50 \leq$ 100 nm.

By adjusting a particle size of the phase-transformation toughening agent, a distribution density of the phase-transformation toughening agent and a magnitude of compressive stress generated during phase transformation are further regulated, thereby further enhancing mechanical properties of the composite solid electrolyte.

In some embodiments, components of the phase-transformation toughening agent include zirconia and a stabilizer.

Although the specific toughening mechanism of the phase-transforming toughening agent remains to be studied, technicians speculate as follows: the phase-transforming toughening agent possesses a metastable state, meaning that it exists at room temperature in a crystal structure stable at high temperatures. In this case, a phase transformation takes place in the phase-transforming toughening material when stimulated by an external force, resulting in volume changes. This suppresses the fracture of the solid electrolyte, thereby achieving phase-transformation toughening. For example, pure $ZrO_2$ generally undergoes the following phase transformations when cooled from a high temperature to room temperature: cubic phase (c), tetragonal phase (t), then to monoclinic phase (m), where the t-m phase transformation takes place at around 1150°C accompanied by approximately 5% of volume change. If the t-m phase transformation point of $ZrO_2$ is stabilized at the room temperature so that the t-m phase transformation can be induced under external stress at room temperature, the volume effect produced by the phase transformation absorbs a significant amount of fracture energy, resulting in exceptionally high fracture toughness and achieving the effect of phase-transformation toughening.

In some embodiments, the phase-transformation toughening agent satisfies at least one of the following conditions (1) and (2):

(1) a mass proportion of the stabilizer in the phase-transformation toughening agent is 0.01% to 50%; and
(2) the stabilizer includes at least one of yttrium oxide, scandium oxide, magnesium oxide, calcium oxide, and cesium oxide.

In some embodiments, the composite solid electrolyte includes at least two types of the phase-transformation toughening agent with different activation energies.

By adjusting types of the phase-transformation toughening agent in the composite solid electrolyte, a phase-transformation toughening agent with higher activation energy and a phase-transformation toughening agent with lower activation energy are mixed for use. Phase transformation activation conditions of the phase-transformation toughening agent are differentiated to form a hierarchical toughening network that effectively suppresses defects and crack propagation, further enhancing toughness of the composite solid electrolyte.

In some embodiments, the composite solid electrolyte includes at least two types of the phase-transformation toughening agent with different activation energies.

In some embodiments, the composite solid electrolyte includes a first phase-transformation toughening agent with activation energy T1 and a second phase-transformation toughening agent with activation energy T2, where T1 and T2 satisfy $0 < T2/TI < 0.8$.

In some embodiments, a total mass proportion of the phase-transformation toughening agent in the composite solid electrolyte is 2% to 25%.

Optionally, a total mass proportion of the phase-transformation toughening agent is 5% to 25%;

Optionally, a total mass proportion of the phase-transformation toughening agent is 10% to 25%;

Optionally, a total mass proportion of the phase-transformation toughening agent is 15% to 25%.

Regulating the mass proportion of the phase-transformation toughening agent further enhances toughness of the composite solid electrolyte while maintaining excellent ionic conductivity.

In some embodiments, the solid electrolyte substrate includes any one of a lithium-ion solid electrolyte, a sodium-ion solid electrolyte, and a potassium-ion solid electrolyte.

According to a second aspect of this application, a preparation method of a composite solid electrolyte is provided, including the following step:

mixing a solid electrolyte substrate and a phase-transformation toughening agent to prepare the composite solid electrolyte.

The solid electrolyte substrate and the phase-transformation toughening agent are mixed to enable the phase-transformation toughening agent to be dispersed in the solid electrolyte substrate.

In some embodiments, the mixing employs dry mixing, and a process of preparing the composite solid electrolyte further includes the following step:

pressing a mixture obtained after the mixing; where pressure used for the pressing is 300 MPa to 550 MPa.

Alternatively, the mixing employs wet mixing, and a process of preparing the composite solid electrolyte further includes the following step:

applying a mixture obtained after the mixing into a film and drying it.

According to a third aspect of this application, a solid-state battery is provided, where the solid-state battery includes the composite solid electrolyte according to the first aspect or a composite solid electrolyte prepared using the preparation method according to the second aspect.

According to a fourth aspect of this application, an electric apparatus is provided, where the electric apparatus includes the solid-state battery according to the third aspect.

## BRIEF DESCRIPTION OF DRAWINGS

Various other advantages and benefits will become apparent to those of ordinary skill in the art upon reading the detailed description of the preferred embodiments below. The drawings are provided solely for the purpose of illustrating the preferred embodiments and are not considered a limitation of this application. Moreover, identical components are denoted by identical reference numerals throughout all drawings. In the accompanying drawings:

FIG. 1 is a schematic diagram of a solid-state battery according to an embodiment;
FIG. 2 is a schematic diagram of a battery pack according to an embodiment;
FIG. 3 is an exploded view of FIG. 2.
FIG. 4 is a schematic diagram of an electric apparatus using a solid-state battery as a power source according to an embodiment; and
FIG. 5 is a scanning electron microscope image of a cross-section of the composite solid electrolyte prepared in Example 1.

Reference Signs:

1. battery pack; 2. upper case; 3. lower case; 4. battery; and 5. electric apparatus.

## DESCRIPTION OF EMBODIMENTS

To make the above objectives, features, and advantages of this application more apparent and understandable, specific embodiments of this application are described in detail below. Numerous specific details are set forth in the following description to provide a thorough understanding of this application. However, this application can be implemented in many ways different from those described herein, and those skilled in the art can make similar improvements without departing from the connotation of this application. Therefore, this application is not limited by the specific embodiments disclosed below.

In this application, unless otherwise expressly specified and defined, terms such as "mounting", "connection", "join", and "fastening" should be understood in a broad sense. For example, a connection can be a fixed connection, a detachable connection, or an integral connection; a connection can be a mechanical connection or an electrical connection; a connection can be a direct connection or an indirect connection via an intermediate medium; a connection can be an internal communication between two elements or an interaction relationship between two elements, unless otherwise explicitly defined. Persons of ordinary skill in the art can understand specific meanings of these terms in this application as appropriate to specific situations.

Additionally, terms "first" and "second" are used for descriptive purposes only and should not be construed as indicating or implying relative importance or implicitly specifying a number of indicated technical features. Therefore, a feature limited by the term "first", "second", or the like can explicitly or implicitly include one or more such features. In the description of this application, "a plurality of" means at least two, for example, two or three, unless otherwise specifically stated.

Unless otherwise defined, all technical and scientific terms used herein have the same meanings as commonly understood by those skilled in the technical field of this application. Terms used herein in the specification of this application are for the purpose of describing specific embodiments only and are not intended to limit this application. The term "and/or" as used herein includes any and all combinations of one or more related listed items.

As summarized in the background, conventional solid electrolytes usually exhibit the brittleness of ceramics. In conventional technologies, technicians have primarily focused on developing new solid electrolytes or improving the structure of solid-state batteries, but no significant breakthroughs or progress have been achieved to date.

In view of this, after extensive creative exploration, the composite solid electrolyte with excellent toughness in this application is obtained.

An embodiment of this application provides a composite solid electrolyte, where components of the composite solid electrolyte include a solid electrolyte substrate and a phase-transformation toughening agent dispersed in the solid electrolyte substrate, where the phase-transformation toughening agent is capable of phase transformation under the action of an external force.

This composite solid electrolyte includes the solid electrolyte substrate and the phase-transformation toughening agent dispersed in the solid electrolyte substrate. When subjected to an external force, for example, applied in a battery, the phase-transforming toughening agent produces internal stress correspondingly because of lithium dendrites. Under the stimulation of this stress, a phase transformation takes place in the phase-transforming toughening agent. The stress transition caused by this phase transformation process can improve the mechanical strength and toughness of the solid electrolyte substrate. This further prevents the emergence of defects inside the solid electrolyte, thereby improving the toughness.

It can be understood that the external force in the statement "the phase-transforming toughening agent is capable of phase transformation under the action of an external force" refers to a force applied to the phase-transforming toughening agent by the external environment. Furthermore, when an external force acts on the phase-transforming toughening agent, the phase-transforming toughening agent is deformed, generating an internal force exerted between various parts of the phase-transforming toughening agent to resist the external force and attempt to restore the position of the phase-transforming toughening agent to that before the deformation. This internal force is referred to as stress, and under the action of this stress, a phase transformation takes place within the phase-transforming toughening agent. The volume change caused by this phase transformation absorbs a significant amount of fracture energy, thereby achieving the effect of phase-transformation toughening

In some embodiments, the phase-transformation toughening agent is uniformly dispersed in grains and at grain boundaries of the solid electrolyte substrate.

It can be understood that the solid electrolyte substrate contains multiple types of grains, and a grain boundary is an interface between grains with the same structure but different orientations. At the grain boundary, atomic arrangement transitions from one orientation to another, so the atomic arrangement at the grain boundary is in a transitional state. When observed under the bright field of a scanning electron microscope (SEM), the grain boundary appears dark and black. The foregoing phase-transformation toughening agent is uniformly dispersed both in the grains and at the grain boundaries of the solid electrolyte substrate.

In some embodiments, a dispersion homogeneity H of the phase-transformation toughening agent in the solid electrolyte substrate is determined using any one of a grid counting method, an intercept method, an area method, a region method, and an exclusive circle method; where H satisfies: H > 20%.

In this composite solid electrolyte, the dispersion homogeneity of the phase-transformation toughening agent in the solid electrolyte substrate is adjusted, so that the phase-transformation toughening agent is dispersed in the solid electrolyte substrate more uniformly, enhancing the overall toughness of the composite solid electrolyte.

It can be understood that a physical state and a chemical state inside the solid electrolyte substrate are referred to as metallography. The dispersion homogeneity of the phase-transformation toughening agent therein can be determined using a quantitative testing method for particle distribution homogeneity in conventional metallographic analysis methods, including any one of the grid counting method, the intercept method, the area method, the region method, and the exclusive circle method. These methods are based on different statistical approaches and have established testing procedures in the field. For specific definitions and statistical methods, refer to [Quantitative Metallographic Analysis Methods for Particle Distribution Uniformity [C] by Chang Hongying, Xie Chongjin, Xu Weixin// Proceedings of the 2007 China Steel Conference. 2007]. In some embodiments, H satisfies: 20% < H < 100%.

Regarding "20% < H < 100%", a value of H includes the minimum and maximum values of this range, as well as every value between the minimum and maximum values. A specific example includes, but is not limited to, a point value in the embodiments and the following point values: 21%, 25%, 30%, 35%, 40%, 45%, 50%, 55%, 60%, 65%, 70%, 75%, 80%, 85%, 90%, 95%, 99%, and 100%; or a range defined by any two values, which, for example, may be 21% to 99%, 25% to 99%, 30% to 99%, 35% to 99%, 40% to 99%, 45% to 99%, 50% to 99%, 21% to 99%, 21% to 99%, 21% to 99%, 21% to 99%, 51% to 99%, 55% to 99%, 60% to 99%, 65% to 99%, 70% to 99%, 75% to 99%, 80% to 99%, 51% to 95%, 55% to 95%, 60% to 95%, 65% to 95%, 70% to 95%, 75% to 95%, 80% to 95%, 51% to 90%, 55% to 90%, 60% to 90%, 65% to 90%, 70% to 90%, 75% to 90%, 80% to 90%, 51% to 85%, 55% to 85%, 60% to 85%, 65% to 85%, 70% to 85%, 75% to 85%, 80% to 85%, 51% to 80%, 55% to 80%, 60% to 80%, 65% to 80%, 70% to 80%, 75% to 80%, 51% to 75%, 55% to 75%, 60% to 75%, 65% to 75%, 70% to 75%, 51% to 70%, 55% to 70%, 60% to 70%, or 65% to 70%.

In some embodiments, the dispersion homogeneity H of the phase-transformation toughening agent in the solid electrolyte substrate is tested using the intercept method, including the following steps:

pressing the composite solid electrolyte into a sample to be tested and cutting the sample to be tested along a direction parallel to a thickness direction of the sample to be tested, where a cutting cross-section formed by cutting the sample to be tested is a cross-section to be tested;

placing the cross-section to be tested under a scanning electron microscope to obtain a scanning electron microscope image; and

distinguishing the solid electrolyte substrate and the phase-transformation toughening agent in the scanning electron microscope image based on contrast in a backscattered electron imaging mode, and determining a distance between any two particles of the phase-transformation toughening agent in the scanning electron microscope image using a grid line analysis method, denoted as $d_i$, where i is in a range from 1 to N, $\overline{d}$ is an average distance between any two particles of the phase-transformation toughening agent in the scanning electron microscope image, and then:

$$H = 1 - \sqrt{\frac{1}{N} \sum \left(\frac{d_i}{\overline{d}} - 1\right)^2}$$ ;

where N is an integer $\geq 2$.

In some embodiments, the composite solid electrolyte is pressed into a disc-shaped sample to be tested.

Optionally, a thickness of the disc is 100 $\mu$m to 2000 $\mu$m.

In some embodiments, in the step of pressing the composite solid electrolyte into the sample to be tested, pressure used is 300 MPa to 550 MPa; and further, the pressure used is 500 MPa.

Specifically, the grid line analysis method refers to setting grids for line analysis in the scanning electron microscope image to determine a distance, also referred to as an intercept, between any two particles of the phase-transformation toughening agent in the scanning electron microscope image. Specifically, the grids are set over the entire scanning electron microscope image, allowing the intercept to be confirmed through the grids.

Optionally, the smallest unit of the grids used is a square grid with a side length of 5 $\mu$m.

It should be noted that contrast refers to a difference in brightness between different regions in an image, that is, a difference in brightness between the solid electrolyte substrate and the phase-transformation toughening agent in the scanning electron microscope image in the backscattered electron imaging mode. Based on the contrast, the solid electrolyte substrate and the phase-transformation toughening agent in the scanning electron microscope image can be distinguished.

In some embodiments, the sample to be tested is a disc, and when the disc is cut along a direction parallel to a thickness direction of the disc, the cutting point is located at the diameter of a bottom surface of the disc.

It should be noted that the sample to be tested may be cut along a direction parallel or perpendicular to the thickness direction of the sample to be tested. Specifically, a cross-section is a section formed by cutting along the direction perpendicular to a height or thickness direction, and a longitudinal section is a section formed by cutting along the direction parallel to the height or thickness direction. For example, for a cylinder, a cross-section is a section formed by cutting along a direction perpendicular to a height direction, which is a circle, and a longitudinal section is a section formed by cutting along a direction parallel to the height direction, which is a rectangle. The height of the cylinder may also be referred to as thickness. If the height of the cylinder is relatively low, for example, less than the diameter of a bottom surface of the cylinder, the cylinder becomes a disc, and in such cases, the height is commonly referred to as thickness.

In some embodiments, when the disc is cut along a direction perpendicular to a thickness direction of the disc, the cutting point is located at half of the thickness of the disc.

In some embodiments, a volume-based particle size distribution $D_v50$ of the phase-transformation toughening agent satisfies: 50 nm $\leq D_v50 \leq$ 100 nm.

By adjusting a particle size of the phase-transformation toughening agent, a distribution density of the phase-transformation toughening agent and a magnitude of compressive stress generated during phase transformation are further regulated, thereby further enhancing mechanical properties of the composite solid electrolyte.

Regarding "50 nm $\leq$ Dv50 $\leq$ 100 nm", a value of $D_v50$ includes the minimum and maximum values of this range, as well as every value between the minimum and maximum values. A specific example includes, but is not limited to, a point value in the embodiments and the following point values: 50 nm, 55 nm, 60 nm, 65 nm, 70 nm, 75 nm, 80 nm, 85 nm, 90 nm, 95 nm, and 100 nm; or a range defined by any two values, which, for example, may be 50 nm to 55 nm, 50 nm to 60 nm, 50 nm to 65 nm, 50 nm to 70 nm, 50 nm to 75 nm, 50 nm to 80 nm, 50 nm to 85 nm, 50 nm to 90 nm, 50 nm to 95 nm, 50 nm to 100 nm, 55 nm to 60 nm, 55 nm to 65 nm, 55 nm to 70 nm, 55 nm to 75 nm, 55 nm to 80 nm, 55 nm to 85 nm, 55 nm to 90 nm, 55 nm to 95 nm, 55 nm to 100 nm, 60 nm to 65 nm, 60 nm to 70 nm, 60 nm to 75 nm, 60 nm to 80 nm, 60 nm to 85 nm, 60 nm to 90 nm, 60 nm to 95 nm, 60 nm to 100 nm, 65 nm to 70 nm, 65 nm to 75 nm, 65 nm to 80 nm, 65 nm to 85 nm, 65 nm to 90 nm, 65 nm to 95 nm, 65 nm to 100 nm, 70 nm to 75 nm, 70 nm to 80 nm, 70 nm to 85 nm, 70 nm to 90 nm, 70 nm to 95 nm, 70 nm to 100 nm, 75 nm to 80 nm, 75 nm to 85 nm, 75 nm to 90 nm, 75 nm to 95 nm, 75 nm to 100 nm, 80 nm to 85 nm, 80 nm to 90 nm, 80 nm to 95 nm, or 80 nm to 100 nm.

In this application, $D_v50$ represents a particle size corresponding to a cumulative volume distribution percentage of the material reaching 50%, which can be measured using instruments and methods known in the art. For example, the $D_v50$ can be conveniently measured using a laser particle size analyzer in accordance with GB/T 19077-2016 Particle Size Distribution Laser Diffraction Method. The testing instrument may be a Mastersizer 2000E laser particle size analyzer from Malvern Instruments Ltd., UK.

In some embodiments, components of the phase-transformation toughening agent include zirconia and a stabilizer.

Although the specific toughening mechanism of the phase-transforming toughening agent remains to be studied, technicians speculate as follows: the phase-transforming toughening agent possesses a metastable state, meaning that it exists at room temperature in a crystal structure stable at high temperatures. In this case, a phase transformation takes place in the phase-transforming toughening material when stimulated by an external force, resulting in volume changes. This suppresses the fracture of the solid electrolyte, thereby achieving phase-transformation toughening. For example, pure $ZrO_2$ generally undergoes the following phase transformations when cooled from a high temperature to room temperature: cubic phase (c), tetragonal phase (t), then to monoclinic phase (m), where the t-m phase transformation takes place at around 1150°C accompanied by volume change. If the t-m phase transformation point of $ZrO_2$ is stabilized at the room temperature so that the t-m phase transformation can be induced under external stress at room temperature, the volume effect produced by the phase transformation absorbs a significant amount of fracture energy, resulting in exceptionally high fracture toughness and achieving the effect of phase-transformation toughening.

In some embodiments, a mass proportion of the stabilizer in the phase-transformation toughening agent is 0.01% to 50%.

In some embodiments, the stabilizer contains at least one element of yttrium, scandium, magnesium, calcium, and cesium.

In some embodiments, the stabilizer includes at least one of yttrium oxide, scandium oxide, magnesium oxide, calcium oxide, and cesium oxide.

When the stabilizer is yttrium oxide, scandium oxide, magnesium oxide, calcium oxide, or cesium oxide, the toughening agent is denoted as YSZ, SSZ, MSZ, CSZ, or CsSZ respectively.

Optionally, the stabilizer includes yttrium oxide.

Regarding "0.01% to 50%", the value includes the minimum and maximum value of this range, as well as every value between the minimum and maximum values. A specific example includes, but is not limited to, a point value in the embodiments and the following point values: 0.01%, 0.05%, 0.1%, 1%, 5%, 10%, 15%, 20%, 25%, 30%, 35%, 40%, 45%, and 50%; or a range defined by any two values, which, for example, may be 1% to 50%, 5% to 50%, 10% to 50%, 15% to 50%, 20% to 50%, 25% to 50%, 30% to 50%, 35% to 50%, 40% to 50%, 45% to 50%, 1% to 45%, 5% to 45%, 10% to 45%, 15% to 45%, 20% to 45%, 25% to 45%, 30% to 45%, 35% to 45%, 40% to 45%, 1% to 40%, 5% to 40%, 10% to 40%, 15% to 40%, 20% to 40%, 25% to 40%, 30% to 40%, 35% to 40%, 1% to 35%, 5% to 35%, 10% to 35%, 15% to 35%, 20% to 35%, 25% to 35%, 30% to 35%, 1% to 30%, 5% to 30%, 10% to 30%, 15% to 30%, 20% to 30%, 1% to 25%, 5% to 25%, 10% to 25%, 15% to 25%, or 20% to 25%.

In some embodiments, the composite solid electrolyte includes at least two types of the phase-transformation toughening agent with different activation energies.

By adjusting types of the phase-transformation toughening agent in the composite solid electrolyte, at least two types of the phase-transformation toughening agent with different activation energies are used. In other words, a phase-transformation toughening agent with higher activation energy and a phase-transformation toughening agent with lower activation energy are mixed for use. Phase transformation activation conditions of the phase-transformation toughening agent are differentiated to form a hierarchical toughening network that effectively suppresses defects and crack propagation, further enhancing toughness of the composite solid electrolyte.

In some embodiments, the composite solid electrolyte includes a first phase-transformation toughening agent with activation energy T1 and a second phase-transformation toughening agent with activation energy T2, where T1 and T2 satisfy $0 < T2/T1 < 0.8$.

By adjusting a ratio of activation energies of two types of the phase-transformation toughening agent with different activation energies, the hierarchical toughening network is further refined.

It should be noted that "activation energy" refers to energy required for a molecule to transition from a normal state to an active state prone to chemical reaction. Further, activation energy of a substance can be tested and calculated using the Arrhenius equation. Specifically, the foregoing phase-transformation toughening agent is commercially available, and the activation energy of the phase-transformation toughening agent can be obtained by querying product attribute parameters or referencing relevant literature records.

In some embodiments, a mass ratio of the first phase-transformation toughening agent to the second phase-transformation toughening agent is 1:(10-1).

Regarding "1:(10-1)", the value includes the minimum and maximum values of this range, as well as every value between the minimum and maximum values. A specific example includes, but is not limited to, a point value in the embodiments and the following point values: 1:10, 1:9, 1:8, 1:7, 1:6, 1:5, 1:4, 1:3, 1:2, and 1:1; or a range defined by any two values, which, for example, may be 1:(9-1), 1:(8-1), 1:(7-1), 1:(6-1), 1:(5-1), 1:(4-1), 1:(3-1), 1:(2-1), 1:(10-2), 1:(9-2), 1:(8-2), 1:(7-2), 1:(6-2), 1:(5-2), 1:(4-2), 1:(3-2), 1:(10-3), 1:(9-3), 1:(8-3), 1:(7-3), 1:(6-3), 1:(5-3), 1:(4-3), 1:(10-4), 1:(9-4), 1:(8-4), 1:(7-4), 1:(6-4), 1:(5-4), 1:(4-3), 1:(10-5), 1:(9-5), 1:(8-5), 1:(7-5), or 1:(6-5).

In some embodiments, a total mass proportion of the phase-transformation toughening agent in the composite solid electrolyte is 2% to 25%.

In some embodiments, a total mass proportion of the phase-transformation toughening agent in the composite solid electrolyte is 5% to 25%.

In some embodiments, a total mass proportion of the phase-transformation toughening agent in the composite solid electrolyte is 10% to 25%.

In some embodiments, a total mass proportion of the phase-transformation toughening agent in the composite solid electrolyte is 15% to 25%.

Regulating the mass proportion of the phase-transformation toughening agent further enhances toughness of the composite solid electrolyte while maintaining excellent ionic conductivity.

Regarding "2% to 25%", the value includes the minimum and maximum values of this range, as well as every value between the minimum and maximum values. A specific example includes, but is not limited to, a point value in the embodiments and the following point values: 2%, 5%, 10%, 15%, 20%, and 25%; or a range defined by any two values, which, for example, may be 2% to 5%, 2% to 10%, 2% to 15%, 2% to 20%, 2% to 25%, 5% to 10%, 5% to 15%, 5% to 20%, 5% to 25%, 10% to 15%, 10% to 20%, 10% to 25%, 15% to 20%, 15% to 25%, or 20% to 25%.

In some embodiments, the solid electrolyte substrate includes any one of a lithium-ion solid electrolyte, a sodium-ion solid electrolyte, and a potassium-ion solid electrolyte.

The foregoing lithium-ion solid electrolyte, sodium-ion solid electrolyte, and potassium-ion solid electrolyte may be any lithium-ion solid electrolyte, sodium-ion solid electrolyte, and potassium-ion solid electrolyte commonly used in the art.

In some embodiments, the solid electrolyte substrate is a lithium-ion solid electrolyte.

Herein, examples of the lithium-ion solid electrolyte are provided, including but not limited to:

LISICON type, for example, $\gamma$-$Li_3PO_4$;
NASICON type, for example, $Li_{(1+x1)}Q_xM_{(2-x1)}(PO_4)_3$, where $0 \leq x1 < 1$, and Q includes at least one of Al, Cr, Ba, Fe, Sc, In, Lu, Y, and La;

garnet type, for example, $Li_{(7-x2)}La_3Zr_{(2-x2)}M_{x2}O12$, where $0 \leq x2 < 1$, and M includes at least one of Sb, Nb, Ta, Te, and W;

LIPON type, for example, $Li_{x3}PO_{y1}N_{z1}$; where $0 < x3 \leq 1$, $0 < y1 \leq 1$, and $0 < z1 \leq 1$;

perovskite type, for example, $Li3_x4Q_{(2/3-x4)}MO_3$, where $0.04 < x4 < 0.17$, Q includes at least one of La, Sr, Ba, and Nd, and M includes at least one of Al, Ti, and Ge;

anti-perovskite type, for example, $Li_3OCl$; Thio-LiSICON type, for example, $Li_{(3+x5)}My2A_{(1-y2)}Q_{(4-z2)}T_{z2}$, where $-1 < x5 < 2$, $0 \leq y2 \leq 1$, $0 \leq z2 \leq 2$, M includes at least one of B, Al, In, Si, Ge, Sn, Ti, W, and Mo, A includes at least one of P, As, Sb, and Bi, Q includes at least one of S and Se, and T includes at least one of F, Cl, Br, and I;

sulfide solid electrolyte, including: thiophosphate type, $Li_3PS_4$ and the like; argyrodite type, $Li_6PS_5Cl$; halide type, $Li_3InCl_6$; hydride type, at least one of $0.7Li(CB_9H_{10})$ to $0.3Li(CB_{11}H_{12})$; for example, $Li_{(10+x6)}M_{(1+y3)}A_{(2-y3)}Q_{(12-z3)}H_{z3}$ type, where $-2 < x6 < 2$, $0 \leq y3 \leq 2$, $0 \leq z3 \leq 2$, M includes at least one of B, Al, In, Si, Ge, Sn, Ti, W, and Mo; A includes at least one of P, As, Sb, and Bi, Q includes at least one of S and Se, H includes at least one of F, Cl, Br, and I; (100-x7) $Li_2S \cdot x7M \cdot y4Q$ type, where $20 \leq x7 \leq 30$, $0 \leq y4 \leq 50$, M includes at least one of $B_2S_3$, $Al_2S_3$, $In_2S_3$, $SiS_2$, $GeS_2$, $SnS_2$, $P_2S_5$, $As_2S_3$, $Sb_2S_5$, $Bi_2S_3$, $WS_2$, and $MoS_2$, and Q includes at least one of $B_2O_3$, $Al_2O_3$, $In_2O_3$, $SiO_2$, $GeO_2$, $SnO_2$, $P_2O_5$, $Sb_2O_5$, $Bi_2O_3$, $WO_2$, $WO_3$, $MoO_2$, $MoO_3$, $Fe_2O_3$, ZnO, MgO, CuO, CaO, LiN, $Li_2O$, LiF, LiCl, LiBr, and LiI; argyrodite type, $Li_{(6+x8)}M_{y5}A_{(1-y5)}Q_{(5-z5)}T_{(1+z5)}$, where $-1 \leq x8 \leq 1$, $0 \leq y5 \leq 1$, $-1 < z5 \leq 1$, M includes at least one of B, Al, In, Si, Ge, Sn, Ti, W, and Mo, A including at least one of P, As, Sb, and Bi, Q includes at least one of S and Se, and T includes at least one of F, Cl, Br, and I; halide type: $Li_3MJ$ or $Li_2Sc_{2/3}J$, where M includes at least one of Y, Er, In, Sc, and Ga, and J includes at least one of F, Cl, Br, and I.

When the foregoing sulfide solid electrolyte is a sulfide-type solid electrolyte, the sulfide-type solid electrolyte includes but is not limited to: argyrodite electrolyte; a binary sulfide-type solid-state system such as $Li_2S-P_2S_5$, $Li_2S-SiS_2$, $Li_2S-GeS$, and $Li_2S-B_2S_3$, and a ternary system such as $Li_2S-Me-P_2S_5$, where Me is selected from Si, Ge, Sn, or Al.

Specifically, the foregoing sulfide electrolyte is selected from at least one of $Li_2S-P_2S_5$, $Li_2S-SiS_2$, $Li_2S-GeS$, $Li_2S-B_2S_3$, and $Li_2S-Me-P_2S_5$.

The sodium-ion solid electrolyte includes but is not limited to: NASICON type, $Na_{(1+x9+2y5)}Zr_{(2-y5)}M_{y5}P_{(3-x9)}Si_{x9}O_{12}$, where $0 \leq x9 \leq 3$, $0 \leq y5 \leq 1$, and M includes at least one of Zn, Mg, and Ca; Na-β-Alumina type, $Na_2O \cdot 2Al_2O_3$ or $Na_2O \cdot 3Al_2O_3$; $Na_{(3+x10)}M_{y6}A_{(1-y6)}Q_{(4-z6)}T_{z6}$ type, where $-1 < x10 \leq 2$, $0 \leq y6 \leq 1$, $0 \leq z6 \leq 2$, M includes at least one of B, Al, In, Si, Ge, Sn, Ti, W, and Mo, A includes at least one of P, As, Sb, and Bi, Q includes at least one of S and Se, and T includes at least one of F, Cl, Br, and I; $Na_{(11+x11)}M_{(2-y7)}A_{(1+y7)}Q_{(12-z7)}T_{z7}$ type, where $-1 < x11 < 1$, $0 \leq y7 \leq 2$, $0 \leq z7 \leq 2$, M includes at least one of B, Al, In, Si, Ge, Sn, Ti, W, and Mo, A includes at least one of P, As, Sb, and Bi; $Q = S$, and Se, and T includes at least one of F, Cl, Br, and I; and anti-perovskite type $Na_3OX$, where X includes at least one of Cl, Br, I, and $BH_4$.

The potassium-ion solid electrolyte includes but is not limited to: β-Alumina type, for example, $K_2O \cdot x13Al_2O_3$, where x13 ranges from 8 to 11, anti-perovskite type, for example, $K_3OI$, and at least one of $K_2Fe_4O_7$ type and $KSi_2P_3$ type.

An embodiment of this application further provides a preparation method of a composite solid electrolyte, including the following step S10.

Step S10. Mix a solid electrolyte substrate and a phase-transformation toughening agent to prepare the composite solid electrolyte.

In this preparation method, the solid electrolyte substrate and the phase-transformation toughening agent are mixed so that the phase-transformation toughening agent is be dispersed in the solid electrolyte substrate.

Types and mass ratios of the solid electrolyte substrate and the phase-transformation toughening agent are as described above and are not repeated herein.

In some embodiments, a mixing duration is 0.5 h to 24 h.

In some embodiments, the mixing in step S10 employs dry mixing, and a process of preparing the composite solid electrolyte further includes the following steps:

pressing a mixture obtained after the mixing; where pressure used for the pressing is 300 MPa to 500 MPa.

It can be understood that dry mixing refers to directly mixing the solid electrolyte substrate and the phase-transformation toughening agent, which can be specifically performed using a mixer.

In some embodiments, the mixing in step S10 employs wet mixing, and a process of preparing the composite solid electrolyte further includes the following step:

applying a mixture obtained after the mixing into a film and drying it.

Optionally, a thickness of the film-shaped mixture is 10 μm to 500 μm.

In some embodiments, wet mixing refers to mixing the solid electrolyte substrate, the phase-transformation toughening agent, and a solvent to form a mixture slurry.

Optionally, the solvent may be at least one of water, small-molecule alcohol, and an alcohol ether solvent. Further optionally, the small-molecule alcohol includes ethanol, propanol, and the like.

The drying step is intended to dry the solvent in a wet film formed by applying. There are no specific requirements for drying temperature or duration, as long as the solvent in the wet film formed by applying can be volatilized and dried.

Specifically, drying methods commonly used in the art can be employed, including but not limited to vacuum drying, heat drying, and the like.

In some embodiments, the mixing duration includes but is not limited to: 0.5 h to 24 h.

Further, the mixing step is performed by means of stirring. For example, mixing is performed by a ball mill with no grinding balls added, and materials are mixed depending on the force generated by the rotation of the ball mill.

In some embodiments, a rotation speed of the ball mill is 100 RPM to 300 RPM.

It can be understood that, without grinding balls, the ball mill's rotation has slight impact on a particle size of the materials, reducing the change in particle size of the materials before and after mixing.

An embodiment of this application provides a solid-state battery, where the solid-state battery includes the foregoing composite solid electrolyte or the composite solid electrolyte prepared using the foregoing preparation method of the composite solid electrolyte.

This composite solid electrolyte includes the solid electrolyte substrate and the phase-transformation toughening agent dispersed in the solid electrolyte substrate. When subjected to an external force, for example, applied in a battery, the phase-transforming toughening agent produces internal stress correspondingly because of lithium dendrites. Under the stimulation of this stress, a phase transformation takes place in the phase-transforming toughening agent. The stress transition caused by this phase transformation process can improve the mechanical strength and toughness of the solid electrolyte substrate. This further prevents the emergence of defects inside the solid electrolyte, thereby enhancing the toughness and increasing the service life of the battery.

In some embodiments, in the foregoing solid-state battery, the composite solid electrolyte exists in the form of a membrane. Further, this solid-state battery further includes a positive electrode plate and a negative electrode plate, with the composite solid electrolyte membrane disposed between the positive electrode plate and the negative electrode plate.

The positive electrode plate and the negative electrode plate may be a positive electrode plate and a negative electrode plate commonly used in the art. Herein, non-limiting examples of the positive electrode plate and the negative electrode plate are provided.

[Negative electrode plate]

The negative electrode plate includes a negative electrode current collector and a negative electrode active layer loaded on a surface of the negative electrode current collector.

Components of the negative electrode active layer include a negative electrode active material.

The foregoing negative electrode active material may be a negative electrode active material commonly used in this application, including at least one of a lithium metal negative electrode material, a carbon-based negative electrode material, an oxide negative electrode material, and a silicon-based negative electrode material.

In any embodiment of this application, the foregoing negative electrode active material includes at least one of lithium metal, a lithium-containing alloy, a lithium-containing composite, mesophase carbon microspheres, graphite, glassy carbon, carbon nanotubes, a carbon-carbon composite material, carbon fibers, hard carbon, soft carbon, magnesium oxide, a silicon-carbon composite, $TiO_2$, $MoO_2$, $In_2O_3$, $Al_2O_3$, $Cu_2O$, $VO_2$, $SnO_x$, $SiO_x$, $Ga_2O_3$, $Sb_2O_5$, and $Bi_2O$.

In any embodiment of this application, a mass proportion of the negative electrode active material in the negative electrode active layer is 70% to 99.9%.

In any embodiment of this application, the components of the foregoing negative electrode active layer further include a negative electrode conductive agent and a negative electrode binder.

In any embodiment of this application, the negative electrode conductive agent may be a conductive material commonly used in the art, including but not limited to: at least one of graphite, carbon nanotubes, nanofiber, carbon black, and graphene. Specifically, it may be selected from at least one of SP, KS-6, acetylene black, branched Ketjen black ECP, SFG-6, vapor-grown carbon fiber VGCF, carbon nanotubes CNTs, graphene, and a composite conductive agent thereof.

Based on a total weight of the negative electrode active layer, a weight ratio of the negative electrode conductive agent in the negative electrode active layer is 0 wt% to 20 wt%.

The negative electrode binder may be a binder commonly used in the art, and may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

Based on the total weight of the negative electrode active layer, a weight ratio of the negative electrode binder in the negative electrode active layer is 0 wt% to 30 wt%.

In any embodiment of this application, the negative electrode active layer optionally further includes other additives, such as a thickener, for example, sodium carboxymethyl cellulose (CMC-Na). Based on the total weight of the negative electrode active layer, a weight ratio of the other additive in the negative electrode active layer is 0 wt% to 15 wt%.

In any embodiment of this application, the current collector in the negative electrode plate may be a metal foil or a composite current collector. For example, a copper foil may be used as the metal foil. The composite current collector may include a polymer material substrate and a metal layer formed on at least one surface of the polymer material substrate. The composite current collector may be formed by applying a metal material on a polymer material substrate.

Optionally, the metal material includes at least one of aluminum, an aluminum alloy, nickel, a nickel alloy, titanium, a titanium alloy, silver, and a silver alloy.

Optionally, the polymer substrate includes at least one of polypropylene (PP), polyethylene terephthalate (PET), polybutylene terephthalate (PBT), polystyrene (PS), and polyethylene (PE).

In any embodiment of this application, the negative electrode plate may be prepared as follows: dispersing the components for preparing the negative electrode plate, such as the negative electrode active material, the conductive agent, the binder, and any other components, in a solvent to form a negative electrode slurry; applying the negative electrode slurry onto a negative electrode current collector, and after drying, cold pressing, and other processes, obtaining the negative electrode plate.

In some embodiments, the solvent is water, for example, deionized water.

In some embodiments, a solid content of the negative electrode slurry is 30 wt% to 70 wt%, with the viscosity at room temperature adjusted to 2000 mPa·s to 10000 mPa·s. The obtained negative electrode slurry is applied onto the negative electrode current collector. After drying and cold pressing, for example, rolling, the negative electrode plate is obtained. A coating density per unit area of the negative electrode powder is 75 $mg/m^2$ to 220 $mg/m^2$, and a compacted density of the negative electrode plate is 1.2 $g/m^3$ to 2.0 $g/m^3$.

[Positive electrode plate]

The positive electrode plate includes a positive electrode current collector and a positive electrode active layer loaded on a surface of the positive electrode current collector.

Components of the positive electrode active layer include a positive electrode active material.

In some embodiments, a mass proportion of the positive electrode active material in the positive electrode active layer is 70% to 100%.

In some embodiments, the positive electrode active material may be a positive electrode active material known in the art for use in secondary batteries.

In any embodiment of this application, the positive electrode active material includes a sodium-ion positive electrode active material or a lithium-ion positive electrode active material.

As an example, the lithium-ion active material may include at least one of the following materials: an olivine-structured lithium-containing phosphate, a lithium transition metal oxide, and respective modified compounds thereof. However, this application is not limited to these materials, and other conventional positive electrode active materials for batteries may also be used. These positive electrode active materials may be used alone or in combination. Examples of the lithium transition metal oxide may include, but are not limited to, at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include, but are not limited to, at least one of lithium iron phosphate (for example, $LiFePO_4$ (LFP for short)), lithium manganese phosphate (for example, $LiMnPO_4$), and lithium manganese iron phosphate.

In any embodiment of this application, a molecular formula of the lithium-ion active material is: $LiFe_xMn_{(1-x)}PO_4$, where x is 0 or 1.

It can be understood that: when x is 0, $LiFe_xMn_{(1-x)}PO_4$ is $LiMnPO_4$, namely, lithium manganese phosphate, when x is 1, $LiFe_xMn_{(1-x)}PO_4$ is $LiFePO_4$, namely, lithium iron phosphate.

As an example, the sodium-ion positive electrode active material may include at least one of the following materials: a sodium transition metal oxide, a polyanionic compound, and a Prussian blue compound. However, this application is not limited to these materials, and other conventionally known positive electrode active material for sodium-ion batteries may also be used.

In any embodiment of this application, the positive electrode active material includes at least one of a sodium transition metal oxide, a polyanionic compound, and a Prussian blue compound.

Optionally, the positive electrode active material includes at least one of a sodium transition metal oxide and a polyanionic compound.

The sodium transition metal oxide has a layered transition metal structure. Compared to the rhombohedral phase of the Prussian blue compound, theoretically, the layered transition metal structure has a higher thickness rebound rate. However, in practical applications, the Prussian blue compound easily absorbs water to form crystal water and vacancy defects, leading to an increased thickness rebound rate and even structural collapse. Therefore, when a sodium transition metal oxide is used as the positive electrode active material, the thickness rebound rate of the positive electrode plate is lower instead.

Anionic structural units in the polyanionic compound are connected into a three-dimensional structure through covalent bonds, providing good structural stability. When used as the positive electrode active material, the positive electrode plate has a low thickness rebound rate.

In an optional technical solution of this application, in the sodium transition metal oxide, the transition metal includes at least one of Mn, Fe, Ni, Co, Cr, Cu, Ti, Zn, V, Zr, and Ce. For example, the sodium transition metal oxide is $Na_xMO_2$, where M includes at least one or more of Ti, V, Mn, Co, Ni, Fe, Cr, and Cu, and $0 < x \leq 1$.

In an optional technical solution of this application, the polyanionic compound may be a class of compounds having sodium ions, transition metal ions, and tetrahedral $(YO_4)^{n-}$ anionic units. The transition metal includes at least one of Mn, Fe, Ni, Co, Cr, Cu, Ti, Zn, V, Zr, and Ce; Y includes at least one of P, S, and Si; and n represents a valence state of $(YO_4)^{n-}$.

The polyanionic compound may alternatively be a class of compounds having sodium ions, transition metal ions, tetrahedral $(YO_4)^{n-}$ anionic units, and halogen anions. The transition metal includes at least one of Mn, Fe, Ni, Co, Cr, Cu, Ti, Zn, V, Zr, and Ce; Y includes at least one of P, S, and Si; n represents a valence state of $(YO_4)^{n-}$; and the halogen may be at least one of F, Cl, and Br.

The polyanionic compound may alternatively be a class of compounds having sodium ions, tetrahedral $(YO_4)^{n-}$ anionic units, polyhedral units $(ZO_y)^{m+}$, and selectable halogen anions. Y includes at least one of P, S, and Si; n represents a valence state of $(YO_4)^{n-}$; Z represents a transition metal, including at least one of Mn, Fe, Ni, Co, Cr, Cu, Ti, Zn, V, Zr, and Ce; m represents a valence state of $(ZO_y)^{m+}$; and the halogen may be at least one of F, Cl, and Br.

For example, the polyanionic compound is at least one of $NaFePO_4$, $Na_3V_2(PO_4)_3$ (sodium vanadium phosphate, NVP for short), $Na_4Fe_3(PO_4)_2(P_2O_7)$, $NaM'PO_4F$ (where M' is one or more of V, Fe, Mn, and Ni), and $Na_3(VO_y)_2(PO_4)_2F_{3-2y}$ ($0 \leq y \leq 1$).

The Prussian blue compound may be a class of compounds having sodium ions, transition metal ions, and cyanogen ions $(CN^-)$. The transition metal includes at least one of Mn, Fe, Ni, Co, Cr, Cu, Ti, Zn, V, Zr, and Ce. For example, the Prussian blue compound is $Na_aMe_bMe'_c(CN)_6$, where Me and Me' each independently include at least one of Ni, Cu, Fe, Mn, Co, and Zn, $0 < a \leq 2$, $0 < b < 1$, and $0 < c < 1$.

In any embodiment of this application, the components of the positive electrode active layer further include a positive electrode binder, where a mass proportion of the positive electrode binder in the positive electrode active layer is 0.05% to 10%.

Optionally, the mass proportion of the positive electrode binder in the positive electrode active layer is 0.1% to 8%.

The positive electrode binder may be any binder commonly used in the art. As an example, the positive electrode binder includes at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a fluorine-containing acrylate resin, sodium carboxymethyl cellulose, hydroxypropyl cellulose, potassium hydroxymethyl cellulose, diacetyl cellulose, polyacrylic acid, sodium alginate, styrene-butadiene rubber, acrylic butadiene rubber, polypyrrole, polyaniline, epoxy resin, and guar gum.

In any embodiment of this application, the components of the positive electrode active layer further include a positive electrode conductive agent, where a mass proportion of the positive electrode conductive agent in the positive electrode active layer is 0.05% to 8%.

Optionally, the mass proportion of the positive electrode conductive agent in the positive electrode active layer is 0.1% to 6%.

As an example, the positive electrode conductive agent may include at least one of superconducting carbon, acetylene black, carbon black, Ketjen black, carbon dots, carbon nanotubes, graphene, and carbon nanofibers.

The positive electrode current collector may be a metal foil or a composite current collector. For example, a copper foil may be used as the metal foil. The composite current collector may include a polymer material substrate and a metal layer formed on at least one surface of the polymer material substrate. The composite current collector may be formed by applying a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode plate may be prepared as follows: dispersing the components for preparing the positive electrode plate, such as the positive electrode active material, the positive electrode conductive agent, the positive electrode binder, and any other components, in a solvent (for example, N-methylpyrrolidone) to form a positive electrode slurry; applying the positive electrode slurry onto a positive electrode current collector, and after drying, cold pressing, and other processes, obtaining the positive electrode plate.

In some embodiments, the foregoing solid-state battery is an all-solid-state battery or a semi-solid-state battery.

In some embodiments, in the solid-state battery, the foregoing composite solid electrolyte exists in the form of a composite solid electrolyte membrane, located between the positive electrode plate and the negative electrode plate.

In some embodiments, the positive electrode plate and the negative electrode plate may be formed into an electrode assembly through winding lamination.

Further, the foregoing solid-state battery further includes a housing for packaging the positive electrode plate, the negative electrode plate, and the composite solid electrolyte membrane.

In some embodiments, the housing may be a hard shell, for example, a hard plastic shell, an aluminum shell, or a steel shell. It may alternatively be a soft pack, for example, a soft pouch. The soft pack may be made of plastic, for example, polypropylene, polybutylene terephthalate, and polybutylene succinate.

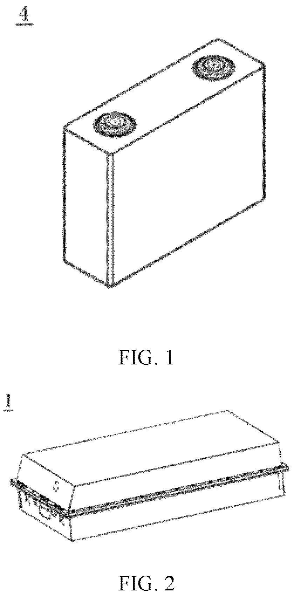

This application does not imposes particular limitation on the shape of the battery, which may be cylindrical, square, or any other shape. For example, FIG. 1 shows a solid-state battery 4 with a square structure as an example.

This application further provides an electric apparatus, where the electric apparatus includes the foregoing solid-state battery.

Further, in this electric apparatus, the solid-state battery may exist in the form of a battery cell or may be further assembled into a battery pack.

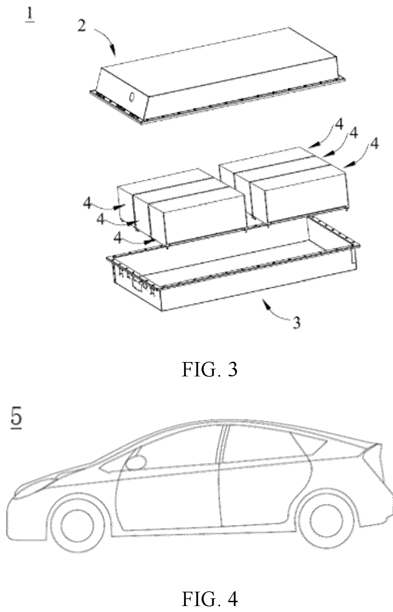

FIG. 2 and FIG. 3 show a battery pack 1 as an example. The battery pack 1 includes a battery box and one or more solid-state batteries 4 disposed within the battery box. The battery box includes an upper case 2 and a lower case 3, with the upper case 2 capable of covering the lower case 3 to form an enclosed space for the battery 4.

A plurality of solid-state batteries 4 may be arranged in the battery box in any manner.

The solid-state battery or the battery pack assembled therefrom may be used as a power source for the electric apparatus or as an energy storage unit for the electric apparatus.

The electric apparatus may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, and an energy storage system.

FIG. 4 shows an electric apparatus 5 as an example. The electric apparatus 5 is a battery electric vehicle, hybrid electric vehicle, plug-in hybrid electric vehicle, or the like. To meet the requirements of the electric apparatus 5 for batteries with high power and high energy density, a battery pack may be used.

As another example, the electric apparatus may be a mobile phone, a tablet computer, a notebook computer, or the like. The apparatus is usually required to be thin and light, and therefore may use a battery as the power source.

This application is described below in conjunction with specific examples, but this application is not limited to the examples below. It should be understood that the appended claims outline the scope of this application, and under the guidance of the concepts of this application, those skilled in the art should recognize that certain modifications to the embodiments of this application will fall within the spirit and scope of the claims of this application.

The following are specific examples.

Example 1

Preparation of composite solid electrolyte. The specific steps are as follows.

S1. Dry mixing of a solid electrolyte substrate ($Li_6PS_5Cl$) and a phase-transformation toughening agent was performed. A Fritsch Pulverisette planetary ball mill was used for mixing at a rotation speed of 200 RPM for 6 h to obtain a mixture.

The phase-transformation toughening agent included zirconia and a stabilizer. Based on a mass of the phase-transformation toughening agent, a mass proportion of the stabilizer was denoted as Y1.

Referring to GB/T 19077-2016 Particle Size Distribution Laser Diffraction Method, a laser particle size analyzer was used to measure $D_v50$ of the phase-transformation toughening agent, representing a particle size corresponding to a cumulative volume distribution percentage of the material reaching 50%. The testing instrument may be a Mastersizer 2000E laser particle size analyzer from Malvern Instruments Ltd., UK.

Based on a total mass of the mixture, a mass proportion of the phase-transformation toughening agent was denoted as Y2.

The phase-transformation toughening agent used is commercially available, and activation energy of the phase-transformation toughening agent was denoted as $T_n$, where n corresponds to a type of the phase-transformation toughening agent. If multiple types are used, the activation energy is denoted as $T_1$, $T_2$...$T_n$ respectively. Specific parameters are provided in Table 1.

S2. The mixture was placed in a mold and pressed at 500 MPa for 10 minutes into a disc-shaped mixture with a thickness of 1 mm.

S3. Performance testing was conducted on the composite solid electrolyte.

(1) Testing of a dispersion homogeneity H of the phase-transformation toughening agent in the solid electrolyte substrate:

1. The disc-shaped composite solid electrolyte was cut out along a direction perpendicular to its thickness direction, with a cutting line located at the diameter of the disc, and a cutting cross-section formed during the cutting was used as the transverse cross-section to be tested.

2. The cross-section to be tested was placed under a scanning electron microscope to obtain a scanning electron microscope image.

3. The solid electrolyte substrate and the phase-transformation toughening agent in the scanning electron microscope image were distinguished based on contrast in a backscattered electron imaging mode, and a distance between any two particles of the phase-transformation toughening agent in the scanning electron microscope image was determined using a grid line analysis method. Specifically, the grid line analysis method refers to setting grids for line analysis in the scanning electron microscope image to determine a distance between any two particles of the phase-transformation toughening agent in the scanning electron microscope image. The distance was denoted as $d_i$, where i is a value in a range of 1, 2, 3, ..., N, and $\overline{d}$ is an average distance between any two particles of the phase-transformation toughening agent in the scanning electron microscope image. Specifically, the grids are set over the entire scanning electron microscope image, allowing the intercept to be confirmed through the grids. The dispersion homogeneity H was calculated as follows:

$$H = 1 - \sqrt{\frac{1}{N}\sum(\frac{d_i}{\overline{d}} - 1)^2}\ ;$$

where N is an integer.

The smallest unit of the grid used is a square grid with a side length of 5 $\mu$m. Specific results are provided in Table 1.

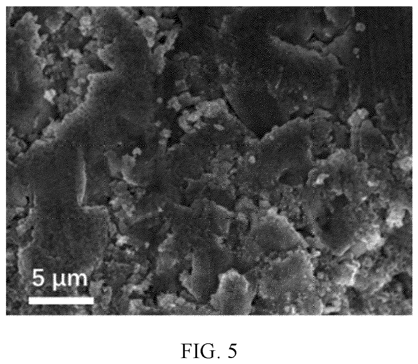

An electron microscope image of the cross-section to be tested of the composite solid electrolyte is shown in FIG. 5, from which dispersion of the phase-transformation toughening agent throughout the electrolyte substrate can be clearly observed.

(2) Testing of fracture toughness of the composite solid electrolyte:

Fracture toughness is a parameter describing an ability of a material to absorb strain energy before fracture occurs. A higher fracture toughness value ($K_{IC}$) indicates a stronger ability to resist crack propagation, and herein it also reflects the modified solid electrolyte's resistance to fracturing and short-circuiting caused by dendrites. Fracture toughness can be tested using methods such as the four-point bending test or Vickers conical indentation test. Herein, the Vickers conical indentation test was selected. The specific process was as follows.

In an argon atmosphere, the surface of the disc of the composite solid electrolyte was polished with sandpaper, sequentially from 800 grit, 2000 grit, 4000 grit, and then to 8000 grit, until the disc surface exhibits mirrorlike characteristics with no obvious defects. Then, a Vickers conical indentation tester was used to perform indentation testing on the polished surface. An appropriate load P was applied to drive the indentation tester until radial cracks appeared at the four corners of the conical indentation. Based on the indentation load P obtained during the test, the extension length C of the radial cracks, and a Vickers microhardness Hv, a fracture toughness value $K_{IC}$ was further calculated using the following formula:

$$K_{IC} = 0.016\left(\frac{E}{H_v}\right)^{\frac{1}{2}}(\frac{P}{C^{\frac{3}{2}}})$$

Where, P was the indentation load when cracks appeared, in N; C was an extension length of the radial cracks, in mm; Hv was the Vickers microhardness, in kgf/mm$^2$; E was the Young's modulus, in GPa; and $K_{IC}$ was the fracture toughness of the solid electrolyte, in MPa·m$^{1/2}$.

(3) Critical current density testing of the composite solid electrolyte

Critical current density refers to the minimum current density at which dendrites and short circuits occur during electrochemical deposition when the composite solid electrolyte material is paired with the corresponding alkali metal electrode. In other words, when electrochemical deposition occurs below the critical current density, dendrites and short circuits do not occur in the composite solid electrolyte.

The critical current density of the composite solid electrolyte was measured using the traditional symmetrical battery step-wise increasing current density cycling method. Taking the lithium-ion solid electrolyte as an example, the specific example was as follows.

The composite solid electrolyte disc was made into a lithium/solid electrolyte/lithium symmetric solid-state battery. After being assembled and encapsulated, the solid-state battery was subjected to lithium deposition and stripping at an initial current of 0.25 mA/cm$^2$. After 1 mA/cm$^2$ of lithium deposition and stripping on one side, the current was increased to 0.5 mA/cm$^2$, with the areal capacity maintained at 1 mAh/cm$^2$ for deposition and stripping, and the current was sequentially increased to 0.75 mA/cm$^2$, 1.0 mA/cm$^2$, 1.25 mA/cm$^2$ till 10 mA/cm$^2$. The voltage changes were observed during this process. The current density at which the voltage suddenly dropped significantly was recorded as the critical current density (Jc). Specific results are provided in Table 1.

Preparation of the composite solid-state battery was as follows.

Preparation of a solid electrolyte membrane: The prepared solid electrolyte material and a binder nitrile rubber (NBR) were dissolved in xylene at a mass ratio of 98:2, and thoroughly stirred to obtain a solid electrolyte slurry. The solid electrolyte slurry was applied on polyethylene terephthalate (PET), followed by drying, cold pressing, and cutting to obtain the solid electrolyte membrane.

Preparation of a positive electrode plate: A positive electrode active material, the solid electrolyte, a binder nitrile rubber (NBR), and a conductive agent VGCF were dissolved in xylene at a mass ratio of 85:13:1: 1, and thoroughly stirred and mixed to obtain a positive electrode slurry. The positive electrode slurry was uniformly applied on a positive electrode current collector aluminum foil, followed by drying, cold pressing, and cutting to obtain the positive electrode plate;

Preparation of a negative electrode plate: Pure lithium metal foil was shaped and rolled to a thickness of 50 μm, and through further rolling, the lithium metal foil was attached to one side of a copper foil surface, then cut to obtain the negative electrode plate.

The solid electrolyte membrane was placed between the negative electrode plate and the positive electrode plate, and they are bonded to ensure tight interface contact, forming a solid-state battery.

(4) Ionic conductivity testing of the composite solid electrolyte

Ionic conductivity is a core indicator of the ability of a composite solid electrolyte to conduct corresponding metal ions. Ionic conductivity is generally tested using the electrochemical impedance spectroscopy method and calculated accordingly. The specific process was as follows.

A 200 nm-thick nickel metal layer was deposited on both sides of the disc of the foregoing composite solid electrolyte via magnetron sputtering PVD. Then, current collectors were attached to the nickel metal layers and connected to an electrochemical workstation via tabs. Electrochemical impedance testing was performed on the composite solid electrolyte disc at a bias voltage of 10 mV and a frequency range of 10$^6$ Hz to 0.1 Hz. The Z' coordinate value of the point closest to the Z' axis in the low-frequency section of the electrochemical impedance spectrum curve, moving from right to left, was taken as the resistance R. The ionic conductivity σ was calculated using the formula below:

$$\sigma = \frac{1}{R} \cdot \frac{d}{A}$$

where, d was the thickness of the composite solid electrolyte disc, and A was the area of contact between the solid electrolyte disc and the current collector.

For specific results, refer to Table 1.

Examples 2 to 4

Examples 2 to 4 are substantially the same as Example 1, with the only difference in the type of the stabilizer used in step S1. Specific conditions are provided in Table 1.

Other steps and conditions are the same as in Example 1, and test results are provided in Table 1.

Examples 5 to 7

Examples 5 to 7 are substantially the same as Example 1, with the only difference in the mass proportion Y2 of the phase-transformation toughening agent in the mixture used in step S1. Specific conditions are provided in Table 1.

Other steps and conditions are the same as in Example 1, and test results are provided in Table 1.

Examples 8 to 10

Examples 8 to 10 are substantially the same as Example 1, with the only difference being: in step S1, the mixing duration is adjusted, so that the dispersion homogeneity H of the phase-transformation toughening agent in the solid electrolyte substrate differs from that in Example 1. Specific conditions are provided in Table 1.

Other steps and conditions are the same as in Example 1, and test results are provided in Table 1.

Examples 11 to 13

Examples 11 to 13 are substantially the same as Example 1, with the only difference in the mass proportion Y1 of the stabilizer in the phase-transformation toughening agent used in step S1. Specific conditions are provided in Table 1.

Other steps and conditions are the same as in Example 1, and test results are provided in Table 1.

Examples 14 and 15

Examples 13 and 14 are substantially the same as Example 1, with the only difference in $D_v50$ of the phase-transformation toughening agent. Specific conditions are provided in Table 1.

Other steps and conditions are the same as in Example 1, and test results are provided in Table 1.

Example 15

Example 15 is substantially the same as Example 1, with the only difference being: the phase-transformation toughening agent in the embodiment is replaced with two different phase-transformation toughening agents, where the mass ratio of the two phase-transformation toughening agents is 1:1 and the total mass proportion Y2 of the two phase-transformation toughening agents in the mixture is the same as the mass proportion Y2 of the phase-transformation toughening agent in Example 1. Specific conditions are provided in Table 1.

Other steps and conditions are the same as in Example 1, and test results are provided in Table 1.

Comparative Example 1

Comparative Example 1 is substantially the same as Example 1, with the only difference being: the solid electrolyte substrate ($Li_6PS_5Cl$) is directly provided for step S4 and subsequent steps in Comparative Example 1.

Parameters and performance test results of each example and comparative example are shown in Table 1, where, based on the mass of the phase-transformation toughening agent, the mass proportion of the stabilizer is denoted as Y1; based on the total mass of the composite solid electrolyte, the mass proportion of the phase-transformation toughening agent is denoted as Y2; and the dispersion homogeneity of the phase-transformation toughening agent in the solid electrolyte substrate is denoted as H.

**Table 1**

| Example | Stabilizer | | | | Phase-transformation toughening agent | | Composite solid electrolyte | | | | | |
| --- | --- | --- | --- | --- | --- | --- | --- | --- | --- | --- | --- | --- |
| | Type | T1 (kJ/mol) | T2 (kJ/mol) | T2/T1 | Dv50 (nm) | Y1 (%) | Y2 (%) | Mixing duration (h) | H (%) | $K_{IC}$ (MPa·m$^{1/2}$) | Jc (mA/cm$^2$) | σ (mS/cm) |
| Example 1 | YSZ | 400 | / | / | 50 | 1.6 | 20 | 6 | 80 | 1.52 | 3.0 | 2.098 |
| Example 2 | SSZ | 300 | / | / | 50 | 1.6 | 20 | 6 | 80 | 1.37 | 2.5 | 2.121 |
| Example 3 | MSZ | 500 | / | / | 50 | 1.6 | 20 | 6 | 80 | 1.23 | 2.25 | 2.091 |
| Example 4 | CSZ | 500 | / | / | 50 | 1.6 | 20 | 6 | 80 | 1.19 | 2.25 | 2.134 |
| Example 5 | YSZ | 400 | / | / | 50 | 1.6 | 2 | 6 | 80 | 0.41 | 1.5 | 2.647 |
| Example 6 | YSZ | 400 | / | / | 50 | 1.6 | 13.5 | 6 | 80 | 1.21 | 2.0 | 2.328 |
| Example 7 | YSZ | 400 | / | / | 50 | 1.6 | 25 | 6 | 80 | 1.63 | 3.0 | 1.716 |
| Example 8 | YSZ | 400 | / | / | 50 | 1.6 | 20 | 0.55 | 20 | 0.93 | 2.0 | 1.873 |
| Example 9 | YSZ | 400 | / | / | 50 | 1.6 | 20 | 3 | 50 | 1.31 | 2.5 | 1.986 |
| Example 10 | YSZ | 400 | / | / | 50 | 1.6 | 20 | 24 | 99 | 1.97 | ?3.75 | 2.254 |
| Example 11 | YSZ | 100 | / | / | 50 | 0.01 | 20 | 6 | 80 | 0.77 | 1.75 | 2.091 |
| Example 12 | YSZ | 600 | / | / | 50 | 10 | 20 | 6 | 80 | 1.21 | 2.25 | 2.221 |
| Example 13 | YSZ | 1200 | / | / | 50 | 50 | 20 | 6 | 80 | 0.91 | 1.75 | 2.037 |
| Example 14 | YSZ | 400 | / | / | 100 | 1.6 | 20 | 6 | 80 | 1.29 | 2.75 | 1.997 |
| Example 15 | YSZ | 400 | / | / | 200 | 1.6 | 20 | 6 | 80 | 1.27 | 2.5 | 2.011 |
| Example 16 | YSZ, SSZ | 400 (YSZ) | 300 (SSZ) | 0.75 | 50 | 1.6 | 20 | 6 | 80 | 1.76 | 3.5 | 2.141 |
| Comparative Example 1 | / | / | / | / | / | / | / | / | / | 0.21 | 1.25 | 2.616 |

Note: "/" indicates that the step or substance is not present.

From the test results in the foregoing table, through analysis and comparison of the data of Example 1 and Comparative Example 1, it can be seen that the composite solid electrolyte of this application has high toughness. When subjected to an external force, for example, applied in a battery, the phase-transforming toughening agent produces internal stress correspondingly because of lithium dendrites. Under the stimulation of this stress, a phase transformation takes place in the phase-transforming toughening agent. The stress transition caused by this phase transformation process can improve the mechanical strength and toughness of the solid electrolyte substrate, thereby enhancing the toughness and increasing the service life of the battery.

The technical features of the foregoing embodiments can be combined arbitrarily. To keep the description concise, not all possible combinations of the technical features in the foregoing embodiments are described. However, as long as there is no contradiction in these combinations of technical features, they should be considered within the scope of this specification.

The foregoing embodiments only express several implementations of this application, with relatively specific and detailed descriptions, but they should not be construed as limiting the scope of this application. It should be noted that for those of ordinary skill in the art, several variations and improvements can be made without departing from the concept of this application, all of which fall within the protection scope of this application. Therefore, the protection scope of this application should be subject to the appended claims, and the specification and drawings can be used to interpret the content of the claims.

**Claims**

1. A composite solid electrolyte, **characterized in that** components of the composite solid electrolyte comprise a solid electrolyte substrate and a phase-transformation toughening agent dispersed in the solid electrolyte substrate, wherein the phase-transformation toughening agent is capable of phase transformation under the action of an external force.

2. The composite solid electrolyte according to claim 1, **characterized in that** the phase-transformation toughening agent is uniformly dispersed in the solid electrolyte substrate.

3. The composite solid electrolyte according to claim 1, **characterized in that** the phase-transformation toughening agent is uniformly dispersed in grains and at grain boundaries of the solid electrolyte substrate.

4. The composite solid electrolyte according to any one of claims 1 to 3, **characterized in that** a dispersion homogeneity H of the phase-transformation toughening agent in the solid electrolyte substrate is determined using any one of a grid counting method, an intercept method, an area method, a region method, and an exclusive circle method; wherein H satisfies: $H > 20\%$.

5. The composite solid electrolyte according to claim 4, **characterized in that** H satisfies: $20\% < H < 100\%$.

6. The composite solid electrolyte according to claim 4, **characterized in that** the dispersion homogeneity H of the phase-transformation toughening agent in the solid electrolyte substrate is tested using the intercept method, comprising the following steps:

   pressing the composite solid electrolyte into a sample to be tested and cutting the sample to be tested along a direction parallel to a thickness direction of the sample to be tested, wherein a cutting cross-section formed by cutting the sample to be tested is a cross-section to be tested;
   placing the cross-section to be tested under a scanning electron microscope to obtain a scanning electron microscope image; and
   distinguishing the solid electrolyte substrate and the phase-transformation toughening agent in the scanning electron microscope image based on contrast in a backscattered electron imaging mode, and determining a distance between any two particles of the phase-transformation toughening agent in the scanning electron microscope image using a grid line analysis method, denoted as $d_i$, wherein i is in a range from 1 to N, $\overline{d}$ is an average distance between any two particles of the phase-transformation toughening agent in the scanning electron microscope image, and then

$$H = 1 - \sqrt{\frac{1}{N} \sum (\frac{d_i}{\bar{d}} - 1)^2} \; ;$$

wherein N is an integer $\geq 2$.

7. The composite solid electrolyte according to any one of claims 1 to 3, **characterized in that** a volume-based particle size distribution $D_v50$ of the phase-transformation toughening agent satisfies: 50 nm $\leq D_v50 \leq$ 100 nm.

8. The composite solid electrolyte according to any one of claims 1 to 3, **characterized in that** components of the phase-transformation toughening agent comprise zirconia and a stabilizer.

9. The composite solid electrolyte according to claim 8, **characterized in that** the phase-transformation toughening agent satisfies at least one of the following conditions (1) and (2):

   (1) a mass proportion of the stabilizer in the phase-transformation toughening agent is 0.01% to 50%; and
   (2) the stabilizer comprises at least one of yttrium oxide, scandium oxide, magnesium oxide, calcium oxide, and cesium oxide.

10. The composite solid electrolyte according to any one of claims 1 to 3, **characterized in that** the composite solid electrolyte comprises at least two types of the phase-transformation toughening agent with different activation energies.

11. The composite solid electrolyte according to any one of claims 1 to 3, **characterized in that** the composite solid electrolyte comprises a first phase-transformation toughening agent with activation energy T1 and a second phase-transformation toughening agent with activation energy T2, wherein T1 and T2 satisfy 0 < T2/T1 < 0.8.

12. The composite solid electrolyte according to any one of claims 1 to 3, **characterized in that** a total mass proportion of the phase-transformation toughening agent in the composite solid electrolyte is 2% to 25%.

13. The composite solid electrolyte according to any one of claims 1 to 3, **characterized in that** the solid electrolyte substrate comprises any one of a lithium-ion solid electrolyte, a sodium-ion solid electrolyte, and a potassium-ion solid electrolyte.

14. A preparation method of a composite solid electrolyte, **characterized by** comprising the following step:
    mixing a solid electrolyte substrate and a phase-transformation toughening agent to prepare the composite solid electrolyte.

15. The preparation method according to claim 14, **characterized in that** the mixing employs dry mixing, and a process of preparing the composite solid electrolyte further comprises the following step:

    pressing a mixture obtained after the mixing; wherein pressure used for the pressing is 300 MPa to 550 MPa; or the mixing employs wet mixing, and a process of preparing the composite solid electrolyte further comprises the following step: applying a mixture obtained after the mixing into a film and drying it.

16. A solid-state battery, **characterized in that** the solid-state battery comprises the composite solid electrolyte according to any one of claims 1 to 13 or a composite solid electrolyte prepared using the preparation method of the composite solid electrolyte according to claim 14 or 15.

17. An electric apparatus, **characterized in that** the electric apparatus comprises the solid-state battery according to claim 16.

4

FIG. 1

1

FIG. 2

FIG. 3

FIG. 4

FIG. 5

## INTERNATIONAL SEARCH REPORT

| International application No. |
| --- |
| **PCT/CN2023/112632** |

| A. | CLASSIFICATION OF SUBJECT MATTER |
| --- | --- |

H01M10/056(2010.01)i; H01M10/052(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 电池, 固态, 固体, 电解质, 相变, 增韧剂, 氧化锆, 陶瓷, battery, batteries, solid, electrolyte, phase, change, toughening, agent, zirconia, ceramic?

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| PX | CN 116231051 A (JIANGSU CONTEMPORARY AMPEREX TECHNOLOGY LTD.) 06 June 2023 (2023-06-06) claims 1-17 | | 1-17 |
| X | JP 2000292406 A (NGK SPARK PLUG CO., LTD.) 20 October 2000 (2000-10-20) abstract, description, paragraphs [0001]-[0047], and figures 1-9 | | 1-17 |
| A | CN 114142082 A (SHANGHAI CENAT NEW ENERGY CO., LTD.) 04 March 2022 (2022-03-04) entire document | | 1-17 |
| A | US 2023013068 A1 (BIOENNO TECH LLC.) 19 January 2023 (2023-01-19) entire document | | 1-17 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 September 2023** | **07 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112632**

| Patent document cited in search report | | | Publication date (day/month/year) | Patent family member(s) | | | Publication date (day/month/year) |
|---|---|---|---|---|---|---|---|
| CN | 116231051 | A | 06 June 2023 | None | | | |
| JP | 2000292406 | A | 20 October 2000 | JP | 4198855 | B2 | 17 December 2008 |
| | | | | KR | 20010021013 | A | 15 March 2001 |
| | | | | EP | 1026502 | A2 | 09 August 2000 |
| | | | | CN | 1278064 | A | 27 December 2000 |
| | | | | JP | 2001066280 | A | 16 March 2001 |
| | | | | US | 2003006139 | A1 | 09 January 2003 |
| | | | | US | 2003034247 | A1 | 20 February 2003 |
| | | | | US | 6676817 | B2 | 13 January 2004 |
| | | | | US | 2004094417 | A1 | 20 May 2004 |
| | | | | US | 2004104115 | A1 | 30 June 2004 |
| | | | | EP | 1026502 | A3 | 06 October 2004 |
| | | | | US | 7041207 | B2 | 09 May 2006 |
| | | | | CN | 100344965 | C | 24 October 2007 |
| | | | | EP | 1026502 | B1 | 19 December 2007 |
| | | | | DE | 60037471 | E | 31 January 2008 |
| | | | | DE | 60037471 | T2 | 04 December 2008 |
| | | | | JP | 4125849 | B2 | 30 July 2008 |
| CN | 114142082 | A | 04 March 2022 | None | | | |
| US | 2023013068 | A1 | 19 January 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310484808

- GB 190772016 T

**Non-patent literature cited in the description**

- **CHANG HONGYING** ; **XIE CHONGJIN** ; **XU WEIXIN**. Quantitative Metallographic Analysis Methods for Particle Distribution Uniformity [C. *Proceedings of the 2007 China Steel Conference*, 2007